# EUROPÄISCHE PATENTSCHRIFT

(11) **EP 0 347 688 B1**
(45) Veröffentlichungstag und Bekanntmachung des Hinweises auf die Patenterteilung: **18.08.1993**
(21) Anmeldenummer: 89110556.1
(22) Anmeldetag: 10.06.1989
(51) Int. Cl.: C08G 18/22, C08G 18/38, C08G 18/70, C08G 18/80

(54) **Lagerstabile, hitzehärtbare Stoffmischungen, enthaltend oberflächen-modifizierte Polyisocyanate und Verbindungen mit reaktiven Wasserstoffatomen, und ihre Verwendung zur Herstellung von Folien**
Storage-stable thermally setting mixtures containing surface-modified polyisocyanates and compounds with reactive hydrogen atoms, and their use in the preparation of films
Compositions thermo durcissables stables au stockage contenant des polyisocyanates modifiés sur la surface et des composés contenant des atomes d'hydrogène réactifs et leur utilisation pour la préparation des films

(30) Priorität: 18.06.1988 DE 3820705
(43) Veröffentlichungstag der Anmeldung: 27.12.1989
(73) Patentinhaber: BASF Aktiengesellschaft, 67063 Ludwigshafen (DE)
(72) Erfinder: Horn, Peter, Dr., D-6900 Heidelberg (DE); Blum, Rainer, D-6700 Ludwigshafen (DE); Reich, Erhard, Dr., D-2845 Damme (DE); Ramsteiner, Falko, Dr., D-6700 Ludwigshafen (DE)

(56) Entgegenhaltungen:
- EP-A- 0 062 780
- EP-A- 0 300 388
- DE-A- 1 953 637

## Beschreibung

Die Erfindung beschreibt bei Raumtemperatur lagerbeständige, hitzehärtbare Stoffmischungen, die enthalten oberflächenmodifizierte Polyisocyanate und Verbindungen mit mindestens zwei gegenüber Isocyanatgruppen reaktiven Wasserstoffverbindungen, wobei die Polyisocyanate an ihrer Oberfläche partiell desaktiviert sind mittels eines Reaktionsprodukts, hergestellt aus einem Mol eines organischen Diamins mit 2 bis 32 Kohlenstoffatomen und 1,5 bis 2,5 Molen einer organischen Monocarbonsäure mit mindestens 6 Kohlenstoffatomen, deren Anhydride oder einer Arylsulfonsäure.

Die Stoffmischungen eignen sich insbesondere zur Herstellung von Urethan- und/oder Harnstoffgruppen enthaltenden Folien.

Lagerstabile, hitzehärtbare Einkomponentensysteme auf der Grundlage von organischen Polyisocyanaten und Verbindungen mit mindestens zwei mit Isocyanatgruppen reaktiven Wasserstoffatomen sind bekannt und gewinnen, aufgrund ihrer einfachen Verarbeitung durch Hitzehärtung zu Polyisocyanat-polyadditionsprodukten immer mehr Bedeutung.

Heterogene Einkomponentensysteme auf der Grundlage von zwei- oder mehrwertigen, höhermolekularen Polyhydroxylverbindungen und feinpulverisierten 4,4′-Diphenylmethan-uretdion-diisocyanaten in bestimmten Verhältnissen von OH- zu NCO-Gruppen, die zusätzlich Blei- und/oder Zinnkatalysatoren enthalten, werden beispielsweise in der EP-A 0 071 898 (US 4 442 280) beschrieben.

Nach Angaben der EP-A-0 062 780 (US 4 400 497), EP-A-0 100 507 (US 4 507 456) und EP-A-0 100 508 (US 4 525 570) werden zur Herstellung von bei Raumtemperatur lagerstabilen, hitzehärtbaren Stoffmischungen aus Polyisocyanat und Polyol, die in diskreten Teilchen im Polyol vorliegenden Polyisocyanate an ihrer Oberfläche zu 0,01 bis 20 Äquivalentprozent der insgesamt vorhandenen Isocyanatgruppen mit unterschiedlichen, mit Isocyanatgruppen reaktiven Verbindungen desaktiviert. Als Desaktivierungsmittel genannt werden unter einer Vielzahl von geeigneten mono- oder polyfunktionellen Verbindungen auch kurzkettige organische Diamine und Carboxylgruppen gebunden enthaltende Homo- und Copolymerisate. Als Desaktivierungsmittel nicht genannt werden hingegen Reaktionsprodukte aus organischen Diaminen und organischen Monocarbonsäuren und/oder deren Anhydride.

Die nach den beschriebenen Verfahren erhaltenen Stoffmischungen ergeben durch Hitzehärtung weiche, klebrige Produkte, die dementsprechend als Beschichtungs- und Verklebungsmittel sowie als Dichtungsmassen Anwendung finden.

Die beschriebenen, oberflächenmodifizierten Polyisocyanate mit retardierter Reaktivität und die hieraus hergestellten, durch Hitzeeinwirkung härtbaren Stoffmischungen finden nach Angaben der EP-A-0 103 323 (US 4 483 974), EP-A-0 145 995 (US 4 596 835) und EP-A-0 145 999 (US 4 581 432) auch Verwendung zur Herstellung von Urethan-, Harnstoff- und/oder Isocyanuratgruppen aufweisenden Formteilen, die als Verkleidungs- oder Versteifungsteile in verschiedenen Industriebereichen eingesetzt werden. Hinweise, daß die hitzehärtbaren Stoffmischungen auch zu Folien verarbeitet werden können, sind jedoch auch diesen Publikationen nicht zu entnehmen.

Die Aufgabe der vorliegenden Erfindung bestand darin, konturierte, gegebenenfalls lichtechte Folien mit verbesserten elastischen Eigenschaften aus Polyisocyanat-polyadditionsprodukten herzustellen. Die Folien sollten bis ungefähr 130°C thermostabil, hinterschäumbar und gegen Aminoverbindungen, wie sie üblicherweise als Katalysatoren zur Bildung von Polyisocyanat-polyadditionsprodukten eingesetzt werden, widerstandsfähig sein.

Diese Aufgabe konnte überraschenderweise gelöst werden mit Hilfe der erfindungsgemäßen lagerstabilen, hitzehärtbaren Stoffmischungen, bei welchen die in Form diskreter Teilchen vorliegenden Polyisocyanate mit ausgewählten speziellen Desaktivierungsmitteln an ihrer Oberfläche modifiziert sind.

Gegenstand der Erfindung sind somit lagerbeständige, hitzehärtbare Stoffmischungen, die enthalten:
A. ein organisches Polyisocyanat,
B. mindestens eine Verbindung mit mindestens zwei gegenüber Isocyanatgruppen reaktiven Wasserstoffatomen und einem durchschnittlichen Molekulargewicht von 250 bis 8500,
   wobei man ein bei Raumtemperatur festes organisches Polyisocyanat (A), in Form von diskreten Teilchen mit einem Teilchendurchmesser von 0,1 bis 150 µm an der Teilchenoberfläche durch chemische Reaktion mit einem Desaktivierungsmittel desaktiviert, indem man 0,1 bis 20 Äquivalent% der insgesamt vorhandenen Isocyanatgruppen von (A) mit dem Desaktivierungsmittel umsetzt und das erhaltene oberflächenmodifizierte Polyisocyanat in mindestens einer Verbindung mit mindestens zwei gegenüber Isocyanatgruppen reaktiven Wasserstoffatomen (B) dispergiert,
C. Kettenverlängerungsmittel und/oder Vernetzungsmittel mit einem durchschnittlichen Molekulargewicht von 62 bis 500 und einer durchschnittlichen Funktionalität von 2 bis 4 und in Mengen von 1 bis 25 Gewichtsteilen bezogen auf 100 Gewichtsteile B, sowie
D. Katalysatoren
und die dadurch gekennzeichnet sind, daß man als Desaktivierungsmittel ein Reaktionsprodukt verwendet, das hergestellt wird durch Umsetzung von einem Mol eines primären organischen Amins mit 2 bis 32 Kohlenstoffatomen, ausgewählt aus der Gruppe der aromatischen, aliphatischen, cycloaliphatischen, cycloaliphatisch-aliphatischen und aromatisch-aliphatischen Diamine oder Mischungen aus mindestens zwei der genannten Diamine mit 1,5 bis 2,5 Molen einer organischen Monocarbonsäure oder deren Anhydride mit mindestens 6 Kohlenstoffatomen oder einer Arylsulfonsäure.

Gegenstände der Erfindung sind ferner die Verwendung der erfindungsgemäßen, bei Raumtemperatur lagerstabilen, hitzehärbaren Stoffmischungen zur Herstellung von Urethan- und/oder Harnstoffgruppen gebunden enthaltenden Folien und ein Verfahren zur Herstellung der Urethan- und/oder Harnstoffgruppen enthaltenden Folien, das dadurch gekennzeichnet ist, daß man die erfindungsgemäßen Stoffmischungen mit der Oberfläche eines auf 60 bis 150°C temperierten Formwerkzeugs in Kontakt bringt, die Stoffmischung an der Formwerkzeugoberfläche aushärten läßt und die gebildete Folie vom Formwerkzeug abtrennt.

Durch den Einsatz der Reaktionsprodukte aus den primären Diaminen und organischen Monocarbonsäuren als Desaktivierungsmittel für die in diskreten Teilchen vorliegenden Polyisocyanate wird die Lagerstabilität der Stoffmischung bei Raumtemperatur nicht beeinträchtigt im Vergleich zu aus dem Stand der Technik bekannten Desaktivierungsmitteln, wie z.B. organischen Diaminen und carboxylgruppenhaltigen Polymerisaten. Durch den Zusatz der erfindungsgemäß geeigneten Desaktivierungsmittel werden jedoch Urethan- und/oder Harnstoffgruppen enthaltende Folien erhalten, die überraschenderweise nicht nur ausgezeichnete elastische Eigenschaften verbunden mit guten mechanischen Eigenschaften aufweisen, sondern die auch problemlos von der Oberfläche des Formwerkzeugs abgetrennt werden können.

Die erfindungsgemäßen, bei Raumtemperatur lagerstabilen, hitzehärtbaren Stoffmischungen sind fließfähig und besitzen bei 23°C eine Viskosität von 500 bis 20000 m·Pa·s, vorzugsweise von 1000 bis 4000 m·Pa·s.

Zu den Aufbaukomponenten für die erfindungsgemäßen Stoffmischungen sowie zur Herstellung der Urethan- und/oder Harnstoffgruppen enthaltenden Folien ist folgendes auszuführen:
A. Als organische Polyisocyanate (A) kommen die an sich bekannten, technisch gut zugänglichen aliphatischen, cycloaliphatischen, aromatischen cycloaliphatisch-aliphatischen und aromatisch-aliphatischen mehrwertigen Isocyanate in Betracht, die, sofern ihr Schmelzpunkt nicht über 30°C liegt, zweckmäßigerweise durch geeignete Methoden modifiziert werden. Beispielhaft genannt seien im einzelnen:
   Alkylendiisocyanate mit 2 bis 12, vorzugsweise 4 bis 6 Kohlenstoffatomen im Alkylenrest, wie 1,2-Ethan-, 1,4-Butan-, 2-Ethyl-1,4-butan-, 2-Methyl-1,5-pentan-, 1,6-Hexan-, 2-Ethyl-1,6-hexan-, 1,8-Octan-, 1,10-Decan- und 1,12-Dodecan-diisocyanat, cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan, 2,4- und 2,6-Hexahydrotoluylen-diisocyanat sowie beliebige Gemische dieser Isomeren, 4,4′-, 2,2′- und 2,4′-Dicyclohexylmethan-diisocyanat sowie beliebige Gemische aus mindestens zwei dieser Isomeren; araliphatische Diisocyanate, wie 1,2-, 1,3- und 1,4-Xylylen-diisocyanat und 2,3,5,6-Tetramethyl-1,4-xylylen-diisocyanat, und aromatische Polyisocyanate, wie 4,4′-, 2,4′- und 2,2′-Diisocyanato-diphenylmethan und die entsprechenden Gemische aus mindestens zwei dieser Isomeren, 2,4- oder 2,6-Diisocyanato-toluol und die entsprechenden Isomerengemische, 1,5-Diisocyanato-naphthalin, Polyphenyl-polymethylen-polyisocyanate und Gemische aus den isomeren Diisocyanato-diphenylmethanen und Polyphenyl-polymethylen-polyisocyanaten. Die genannten Di- und Polyisocyanate können einzeln oder in Form von Mischungen eingesetzt werden.
   Geeignet sind auch sogenannte modifizierte mehrwertige Isocyanate, d.h. Produkte die durch chemische Umsetzung obiger Di- und/oder Polyisocyanate erhalten werden. Beispielhaft genannt seien bei Raumtemperatur feste Ester-, Harnstoff-, Biuret-, Allophanat-, Carbodiimid- und vorzugsweise Urethan-, Uretdion- und/oder Isocyanuratgruppen enthaltende Di- und/oder Polyisocyanate.
   Besonders bewährt haben sich und daher vorzugsweise verwendet werden bei Raumtemperatur feste Di- und/oder Polyisocyanate, die in den Verbindungen mit mindestens zwei reaktiven Wasserstoffatomen (B) im wesentlichen unlöslich oder nur in untergeordneten Mengen löslich sind, wie 4,4′-Diisocyanato-diphenylmethan und 1,5-Naphthalin-diisocyanat und die mit Harnstoff-, Urethan-, Uretdion-, Ester- und/oder Isocyanuratgruppen modifizierten Di- und/oder Polyisocyanate auf Basis von 1,6-Hexan-diisocyanat, 1-Isocyanato-3,3,5-trimethyl-5-isocyanatomethyl-cyclohexan, 2,3,5,6-Tetramethyl-1,4-xylylen-diisocyanat, 2,4′-, 4,4′-Diisocyanato-diphenylmethan und insbesondere 2,4- und/oder 2,6-Diisocyanato-toluol.
   Modifizierte Polyisocyanate der bevorzugten Art sind insbesondere Additionsprodukte aus Diisocyanato-toluolen und Trimethylolpropan, trimerisierte Isocyanuratgruppen enthaltende Diisocyanato-toluole und Diisocyanato-diphenylmethane und dimerisierte Uretdiongruppen aufweisende Diisocyanato-toluole, 4,4′- und/oder 2,4′ -Diisocyanato-diphenylmethane sowie Diisocyanato-arylharnstoffe mit der allgemeinen Formel 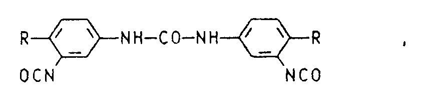 in der R einen niedermolekularen, linearen oder verzweigten Alkylrest mit 1 bis 4 Kohlenstoffatomen, z.B. einen Methylrest, einen Alkoxyrest mit 1 bis 4 Kohlenstoffatomen, z.B. einen Ethoxyrest, oder ein Halogenatom, z.B. ein Chloratom, bedeutet und Diisocyanato-benzoesäurephenylester der Formeln 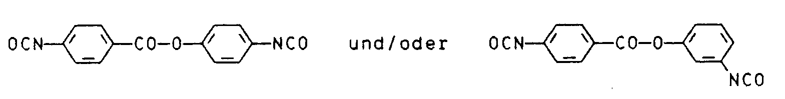 Insbesondere Anwendung finden Uretdiongruppen gebunden enthaltende modifizierte Diisocyanate auf der Grundlage von 2,4- und/oder 2,6-Diisocyanato-toluol, 2,4′- und/oder 4,4′-Diisocyanato-diphenylmethan, 1 ,6-Hexan-diisocyanat und 1-Isocyanato-3,3,5-trimethyl-5-isocyanatomethylcyclohexan, wobei zur Herstellung von lichtbeständigen Folien zweckmäßigerweise bevorzugt Stoffmischungen auf Basis von aliphatischen oder cycloaliphatischen modifizierten Diisocyanaten sowie 2,3,5,6-Tetramethyl-1,4-xylylen-diisocyanat eingesetzt werden. Die organischen und/oder modifizierten organischen Polyisocyanate (A) können einzeln oder in Form von Mischungen verwendet werden.
B. Als Verbindung mit mindestens zwei reaktiven Wasserstoffatomen finden, zweckmäßigerweise solche mit einer Funktionalität von 2 bis 8, vorzugsweise 2 bis 4 und insbesondere 2 und/oder 3 und einem Molekulargewicht von 250 bis 8500, vorzugsweise 600 bis 5600 und insbesondere 1800 bis 4000 Anwendung, wobei in Abhängigkeit z.B. von der Struktur, dem Molekulargewicht und der Funktionalität der Verbindungen die aus den Stoffmischungen hergestellten Urethan- und/oder Harnstoffgruppen enthaltende Endprodukte bekanntermaßen von weichelastisch bis sprödhart variiert werden können. Bewährt haben sich z.B Polyether-polyamine, hydroxylgruppenhaltige Polyether-polyamine und/oder vorzugsweise Polyole ausgewählt aus der Gruppe der Polyether-polyole, polymermodifizierten Polyether-polyole, Polyester-polyole, Polythioether-polyole, hydroxylgruppenhaltigen oder -freien Polyesteramide, hydroxylgruppenhaltigen Polyacetale und hydroxylgruppenhaltigen aliphatischen Polycarbonate oder Mischungen aus den Polyether-polyaminen und Polyolen oder Mischungen aus mindestens zwei der genannten Polyole. Vorzugsweise Anwendung finden Polyester-polyole und/oder insbesondere Polyether-polyole.
   Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure und Fumarsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20-35 : 35-50 : 20-32 Gew.Teilen, und insbesondere Adipinsäure. Beispiele für zwei- und mehrwertige Alkohole, insbesondere Diole sind: Ethandiol, Diethylenglykol 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton, oder Hydroxycarbonsäuren, z.B. ω-Hydroxycapronsäure.
   Die Polyester-polyole besitzen vorzugsweise eine Funktionalität von 2 bis 3 und ein Molekulargewicht von 1.000 bis 3.000 und vorzugsweise 1.800 bis 2.500.
   Insbesondere als Polyole verwendet werden jedoch Polyether-polyole, die nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliumethylat oder Kaliumisopropylat als Katalysatoren oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest und gegebenenfalls einem Startermolekül, das 2 bis 8, vorzugsweise 2 bis 4, reaktive Wasserstoffatome gebunden enthält, hergestellt werden.
   Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, 1,4-Butylendiamin, 1,2-, 1,3-, 1,4-, 1,5- und 1,6-Hexamethylendiamin, Phenylendiamine, 2,4- und 2,6-Toluylendiamin und 4,4′-, 2,4′- und 2,2' -Diamino-diphenylmethan.
   Als Startermoleküle kommen ferner in Betracht Alkanolamine, wie Ethanolamin, Diethanolamin, N-Methyl- und N-Ethyl-ethanolamin, N-Methyl- und N-Ethyl-diethanolamin und Triethanolamin und Ammoniak. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylol-propan, Pentaerythrit, Sorbit, Sucrose und Saccharose.
   Die Polyether-polyole, vorzugsweise Polyoxypropylen-, Polyoxypropylen-polyoxyethylen-polyole und Polyoxytetramethylen-glykole, besitzen vorzugsweise eine Funktionalität von 2 bis 4 und Molekulargewichte von 250 bis 8.500, vorzugsweise 600 bis 5.600 und insbesondere 1.800 bis 4.000. Sie können ebenso wie die Polyester-polyole einzeln oder in Form von Mischungen verwendet werden. Ferner können sie mit den Polyester-polyolen sowie den hydroxylgruppenhaltigen Polyesteramiden, Polyacetalen, Polycarbonaten und/oder Polyether-polyaminen gemischt werden.
   Anstelle der genannten Polyether-polyole können auch polymermodifizierte Polyether-polyole oder Mischungen aus Polyether-polyolen und polymermodifizierten Polyether-polyolen Anwendung finden. Geeignete polymermodifizierte Polyether-polyole enthalten zweckmäßigerweise 2 bis 50 Gew.%, vorzugsweise 3 bis 25 Gew.%, bezogen auf das Gesamtgewicht, anorganische Füllstoffe, wie z.B. Kaolin oder Aluminiumoxide, organische Füllstoffe, wie z.B. Ruß, Kollophonium oder Melamin oder Polymerpartikel, wobei die Polymerpartikel vorzugsweise ausgewählt sind aus der Gruppe der Polyharnstoffe, Polyhydrazide, tert. Aminogruppen gebunden enthaltenden Polyurethane und Pfropfpolymeren, die vorzugsweise hergestellt werden durch in situ-Polymerisation von olefinisch ungesättigten Monomeren, insbesondere Styrol und/oder Acrylnitril, in den oben beschriebenen Polyether-polyolen. Derartige polymermodifizierte Polyether-polyole und Verfahren zu ihrer Herstellung sind z.B. bekannt aus der EP-B-0 011 752 (US 43 04 708), US-A-4 374 209 und DE-A-32 31 497.
   Als hydroxylgruppenhaltige Polyacetale kommen z.B. die aus Glykolen, wie Diethylenglykol, Triethylenglykol, 4,4′-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.
   Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.
   Zu den Polyesteramiden zählen z.B. die aus mehrwertigen gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.
   Geeignete Polyether-polyamine können aus den obengenannten Polyether-polyolen nach bekannten Verfahren hergestellt werden. Beispielhaft genannt seien die Cyanoalkylierung von Polyoxyalkylen-polyolen und anschließende Hydrierung des gebildeten Nitrils (US 3 267 050) oder die Aminierung von Polyoxyalkylen-polyolen mit Aminen oder Ammoniak in Gegenwart von Wasserstoff und Katalysatoren (DE 12 15 373), wobei die Hydroxylgruppen partiell oder im wesentlichen vollständig aminiert werden.
   Die erfindungsgemäßen lagerbeständigen, hitzehärtbaren Stoffmischungen aus dem organischen Polyisocyanat (A), mindestens einer Verbindung mit reaktiven Wasserstoffatomen (B), Kettenverlängerungs- und/oder Vernetzungsmitteln (C) und Katalysatoren (D) enthalten die Polyisocyanate in Form diskreter Teilchen mit Teilchendurchmessern von 0,1 bis 150 µm, vorzugsweise 1 bis 50 µm dispergiert in (B) oder (B) und (C).
   Um zu verhindern, daß bei Raumtemperatur eine Polyadditionsreaktion zwischen den organischen Polyisocyanaten und den Aufbaukomponenten (B) und (C) eintritt, werden die dispergierten Polyisocyanatpartikel an ihrer Oberfläche desaktiviert. Das Desaktivierungsmittel wird hierzu zweckmäßigerweise so gewählt, daß es an der Oberfläche der Polyisocyanatteilchen durch chemische oder physikalische Kräfte gebunden ist und auf diese Weise eine Phasentrennung zwischen den desaktivierten Polyisocyanatteilchen und den übrigen Aufbaukomponenten (B) bis (D) bewirkt wird.
   Für die chemische Desaktivierung werden 0,01 bis 20, vorzugsweise 0,1 bis 10 und insbesondere 0,3 bis 5 Äquivalentprozent der insgesamt vorhandenen Isocyanatgruppen mit dem Desaktivierungsmittel zur Reaktion gebracht.
   Dazu kann das Deskativierungsmittel in den beanspruchten Äquivalenzverhältnissen den Ansätzen zugegeben werden. Ebenfalls geeignet ist ein Verfahren, bei dem das Desaktivierungsmittel in einem Überschuß über das beanspruchte Äquivalenzverhältnis zugegeben wird.
   Nach Belegung der Oberfläche der dispersen Phase mit dem Desaktivierungsmittel kommt die desaktivierende Reaktion zum Stillstand.
   Als Desaktivierungsmittel werden erfindungsgemäß Reaktionsprodukte verwendet, die hergestellt werden durch Umsetzung von einem Mol eines primären organischen Amins mit 2 bis 32, vorzugsweise 6 bis 18 Kohlenstoffatomen, ausgewählt aus der Gruppe der aromatischen, aliphatischen, cycloaliphatischen, cycloaliphatisch-aliphatischen und aromatisch-aliphatischen Diamine oder Mischungen davon mit 1,5 bis 2,5 Molen, vorzugsweise 1,8 bis 2,2 Molen und insbesondere ungefähr 2 Molen einer organischen Monocarbonsäure oder deren Anhydrid mit mindestens 6 Kohlenstoffatomen, vorzugsweise 12 bis 36 Kohlenstoffatomen und insbesondere 12 bis 18 Kohlenstoffatomen, oder einer Arylsulfonsäure bei einer Temperatur im Bereich von ungefähr 10 bis 100°C, vorzugsweise 20 bis 80°C.
   Als geeignete primäre organische Diamine seien beispielhaft genannt: lineare oder verzweigtkettige aliphatische Diamine mit 2 bis 12, vorzugsweise 6 bis 12 Kohlenstoffatomen, wie z.B. 1,2-Ethylen-diamin, 1,2- bzw. 1,3-Propylen-diamin, 1,4-Butylen-diamin, 4-Methyl-pentamethylen-diamin-1,5, 1,5-Pentamethylen-diamin, 2,2,4-Trimethyl-hexamethylen-diamin-1,6, 1,6-Hexamethylen-diamin, 1,8-Octamethylen-diamin, 1,10-Decamethylen-diamin und 1,12-Dodecamethylen-diamin, cycloaliphatische Diamine mit 6 bis 10 Kohlenstoffatomen, wie z.B. Cyclohexan-diamine sowie beliebige Gemische dieser Isomeren, 2,4- und/oder 2,6-Hexahydro-toluylendiamin und Isophoron-diamin, cycloaliphatisch-aliphatische Diamine mit 8 bis 32 Kohlenstoffatomen, vorzugsweise 13 bis 21 Kohlenstoffatomen, wie z.B. 1 .4-Hexahydroxylylen-diamin, 4,4′-, 2,4′- und 2,2′-Dicyclohexylmethan-diamin sowie beliebige Gemische dieser Isomeren, 3,3′ -Dialkyl- und 3,3′,5,5′ -Tetraalkyl-4,4′-dicyclohexylmethan-diamine mit 1 bis 4 Kohlenstoffatomen im linearen oder verzweigten Alkylrest, wie z.B. 3,3′-Dimethyl-, 3,3′-Isopropyl-, 3,3′,5,5′-Tetramethyl-, 3,3′,5,5′ -Tetraethyl- oder 3,3′-5,5-Tetraisopropyl-4,4′-diamino-dicyclohexylmethan, aromatische Diamine mit 6 bis 12 Kohlenstoffatomen, wie z.B. Phenylen-diamine, 2,4- oder 2,6-Toluylen-diamin und die entsprechenden Isomerengemische und Naphthylendiamine und aromatisch-aliphatische Diamine mit 8 bis 32 Kohlenstoffatomen, vorzugsweise 13 bis 21 Kohlenstoffatomen wie z.B. Xylylendiamin, 4,4′-, 2,4′- und 2,2′-Diamino-diphenylmethan, 3,3′-Dialkyl- und 3,3′,5,5′ -Tetraalkyl-4,4′-diamino-diphenylmethane mit 1 bis 4 Kohlenstoffatomen im linearen oder verzweigten Alkylrest, wie z.B. 3,3′-Dimethyl-, 3,3′-Diethyl-, 3,3′,5,5′-Tetramethyl-, 3,3′,5,5′-Tetraethyl-, 3,3′,5,5′-Tetraisopropyl-, 3,5-Dimethyl-3′,5′-diethyl-, 3,5-Dimethyl-3′,5′-diisopropyl-4,4′-diamino-diphenylmethan und 4,4′-Diaminodiphenyl-propan-2,2. Die beispielhaft genannten organischen, primären Diamine können einzeln oder in Form von Mischungen eingesetzt werden. Vorzugsweise Anwendung finden aliphatische, cycloaliphatische oder cycloaliphtisch-aliphatische primäre Diamine mit 6 bis 21 Kohlenstoffatomen.
   Als organische Monocarbonsäuren mit mindestens 6 Kohlenstoffatomen, vorzugsweise 12 bis 36 Kohlenstoffatomen, kommen beispielsweise aromatische Monocarbonsäuren oder deren Anhydride wie z.B. Benzoesäure, o-, m-, p-Toluylsäure und/oder Anissäure in Betracht. Die aromatischen Monocarbonsäuren können gegebenenfalls auch teilweise oder vollständig durch eine bezüglich der Carboxylgruppe äquivalente Menge einer aromatischen Polycarbonsäure, wie z.B. Phthalsäure, Trimellitsäure oder Pyromellitsäure, oder deren Anhydride substituiert werden.
   Als besonders geeignet haben sich jedoch aliphatische oder cycloaliphatische, gesättigte oder ungesättigte Carbonsäuren oder ihre Anhydride mit vorzugsweise mindestens 12 bis 36 Kohlenstoffatomen, insbesondere 12 bis 18 Kohlenstoffatomen erwiesen. Verwendbar sind beispielsweise natürliche oder synthetische Monocarbonsäuren bzw. natürliche Fettsäuregemische wie z.B. Abietinsäure, Palmitinsäure, Stearinsäure, Ölsäure, Elaidinsäure, Linolsäure, Rizinolsäure, Linolensäure oder auch technisch anfallende Fettsäuregemische, wie Spermölfettsäure, Tranfettsäure, Talgfettsäure, Sojaölfettsäure, Palmkernfettsäure, Erdnußfettsäure oder Tallolfettsäure. Bevorzugt sind Stearinsäure und/oder bei Raumtemperatur flüssige Fettsäuren, insbesondere Ölsäure oder auch die Ölsäure enthaltenden technischen Fettsäuregemische. Verwendbar sind ferner Arylsulfonsäuren, wie z.B. Benzolsulfonsäure und/oder Toluolsulfonsäuren.
   Die erfindungsgemäß als Desaktivierungsmittel verwendbaren Reaktionsprodukte liegen vorzugsweise als Salze vor. Geeignet sind jedoch auch die aus den Diaminen und Monocarbonsäuren herstellbaren Carbonsäureamide und Salzreste enthaltenden Carbonsäureamide und Mischungen aus den vorgenannten Carbonsäureamiden und Salzen, wobei die Mengenverhältnisse der einzelnen Komponenten in breiten Bereichen variieren können.
   Als Desaktivierungsmittel besonders bewährt haben sich und werden daher vorzugsweise eingesetzt: Reaktionsprodukte, hergestellt aus einem Mol 3,3′-Dimethyl-4,4-diamino-dicyclohexylmethan und ungefähr 2 Molen Stearinsäure und/oder insbesondere Ölsäure.
C. Die erfindungsgemäßen lagerbeständigen, hitzehärbaren Stoffmischungen enthalten als weitere mit Isocyanatgruppen reaktive Verbindungen Kettenverlängerungsmittel und/oder Vernetzungsmittel (C) mit einem durchschnittlichen Molekulargewicht von 62 bis 500, vorzugsweise von 62 bis 300 und einer Funktionalität von 2 bis 4, vorzugsweise 2 bis 3, die zweckmäßigerweise an aliphatische und/oder cycloaliphatische Reste gebundene Hydroxylgruppen und/oder an aromatische Reste gebundene Aminogruppen aufweisen. Als Beispiele für derartige Kettenverlängerungs- oder Vernetzungsmittel seien genannt: mehrwertige Alkohole mit primären und/oder sekundären an aliphatische und/oder cycloaliphatische Reste gebundenen Hydroxylgruppen wie z. B. Ethandiol-1,2, Propandiol-1,3 und -1,2, 2,2-Dimethyl-propandiol-1,3, Butandiol-1,4, -1,3 und -2,3, Pentandiol-1,5, -2,5, Hexandiol-1,6, 1,4-Bis-(hydroxymethyl)-cyclohexan. 1,4-Dihydroxycyclohexan, 1-Hydroxymethyl-4-hydroxycyclohexan, 4,4′-Dihydroxy-dicyclohexylmethan, 4,4′-(Dihydroxy-di-cyclohexyl)-propan-2,2, 1,4-Dihydroxyethyl-hydrochinon, Trimetylolethan, Trimethylolpropan, Hexantriol-1,2,6, Glycerin und Pentaerythrit. Geeignet sind ferner tertiäre Aminogruppen gebunden enthaltende mehrwertige Alkohole wie z.B. N-Alkyl-dialkanolamine, beispielsweise N-Methyl-diethanolamin und Triethanolamin und N,N′-Bis-hydroxyethylpiperazin. Vorzugsweise verwendet werden 2- und 3-wertige Alkohole, wie Ethandiol-1,2, Butandiol-1,4 und Hexandiol-1,6, Glycerin und Trimethylolpropan und niedermolekulare hydroxylgruppenhaltige Polyoxyalkylenpolyether auf Basis von Ethylenoxid und/oder 1,2-Propylenoxid und den vorgenannten mehrwertigen Alkoholen oder aliphatischen Diaminen mit Molekulargewichten von 60 bis 116 als Startermolekül.
   Als Aufbaukomponente (C) sind ferner aromatische Polyamine geeignet sowie Aminogruppen aufweisende Heterocyclen, deren heterocyclischer Rest aromatischen Charakter besitzt.
   Als aromatische Amine werden zur Herstellung der erfindungsgemäßen Stoffmischung vorzugsweise primäre aromatische Diamine verwendet.
   Zweckmäßigerweise verwendet werden aromatische Diamine, deren primäre Aminogruppen gegenüber Polyisocyanaten keine durch elektronenanziehende Substituenten verursachte verminderte Reaktivität zeigen und vorteilhafterweise solche aromatische Diamine, deren primäre Aminogruppen sterisch gehindert sind. Insbesondere geeignet sind primäre aromatische Diamine der genannten Art, die bei Raumtemperatur flüssig und mit den Verbindungen (B) unter den Verarbeitungsbedingungen ganz oder zumindest teilweise mischbar sind. Bewährt haben sich beispielsweise meta-Phenylendiamin und/oder vorzugsweise alkylsubstituierte meta-Phenylendiamine der Formeln 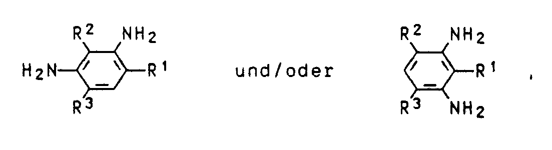 in denen R¹ ein Wasserstoffatom oder ein linearer oder verzweigter Alkylrest mit 1 bis 10, vorzugsweise 1 bis 6 Kohlenstoffatomen ist und R² und R³ gleiche oder verschiedene Alkylreste mit 1 bis 3 Kohlenstoffatomen, wie z.B. ein Methyl-, Ethyl-, Propyl- oder Isopropylrest sind. Geeignet sind insbesondere solche Alkylreste R¹, bei denen die Verzweigungsstelle am C₁-Kohlenstoffatom sitzt. Neben Wasserstoff seien als Alkylreste R¹ beispielhaft genannt: der Methyl-, Ethyl-, n- und iso-Propyl-, Butyl-, Hexyl-, Octyl-, Decyl-, 1-Methyl-octyl-, 2-Ethyl-octyl-, 1-Methyl-hexyl-, 1,1-Dimethyl-pentyl-, 1,3,3-Trimethyl-hexyl-, 1-Ethyl-pentyl-, 2-Ethyl-pentyl- und vorzugsweise der Cyclohexyl-, 1-Methyl-n-propyl-, tert-Butyl-, 1-Ethyl-n-propyl-, 1-Methyl-n-butyl- und 1,1-Dimethyl-n-propylrest.
   Als alkylsubstituierte m-Phenylendiamine kommen beispielsweise in Betracht: 2,4-Dimethyl-, 2,4-Diethyl-, 2,4-Diisopropyl-, 2,4-Diethyl-6-methyl-, 2-Methyl-4,6-diethyl-, 2,4,6-Triethyl-, 2,4-Dimethyl-6-cyclohexyl-, 2-Cyclohexyl-4,6-diethyl-, 2-Cyclohexyl-2,6-diisopropyl-, 2,4-Dimethyl-6-(1-ethyl-n-propyl)-, 2,4-Dimethyl-6-(1,1-dimethyl-n-propyl)- und 2-(1-Methyl-n-butyl)-4 ,6-dimethyl-phenylendiamin-1,3.
   Bewährt haben sich ferner Diamino-diphenylmethane, wie z.B. 4,4′- und/oder 2,4′-Diamino-diphenylmethan, 3,3′-di- und 3,3′,5,5′-tetra-n-alkylsubstituierte 4,4′-Diamino-diphenylmethane wie z.B. 3,3′-Dimethyl-, 3,3′5,5′-Tetramethyl-, 3,3′-Diethyl-, 3,3′,5,5′-Tetraethyl- und 3,3′,5,5′-Tetra-n-propyl-4,4′-diamino-diphenylmethan.
   Anwendung finden vorteilhafterweise Diamino-diphenylmethane der Formel 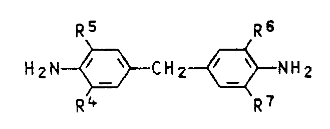 in der R⁴, R⁵, R⁶ und R⁷ gleich oder verschieden sind und einen Methyl-, Ethyl-, Propyl-, Isopropyl-, sek-Butyl- und tert-Butylrest bedeuten, wobei jedoch mindestens einer der Reste ein Isopropyl- oder sek. Butylrest sein muß. Die 4,4′-Diamino-diphenylmethane können auch im Gemisch mit Isomeren der Formeln 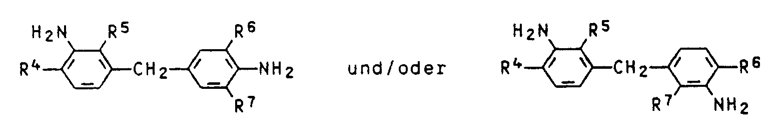 verwendet werden, wobei R⁴, R⁵, R⁶ und R⁷ die obengenannte Bedeutung haben.
   Beispielhaft genannt seien: 3,3′,5-Trimethyl-5′-isopropyl-, 3,3′,5-Triethyl-5′-isopropyl-, 3,3′,5-Trimethyl-5′-sek-butyl-, 3,3′,5-Triethyl-5′-sek-butyl-4,4′-diamino-diphenylmethan, 3,3′-Dimethyl-5,5′-diisopropyl-, 3,3′-Diethyl-5,5′-diisopropyl-, 3,3′-Dimethyl-5,5′-di-sek-butyl-, 3,3′-Diethyl-5,5′-di-sek-butyl-, 3,5-Dimethyl-3′,5′-diisopropyl-, 3,5-Diethyl-3′,5′-diisopropyl-, 3,5′-Dimethyl-3′,5′-di-sek-butyl-, 3,5-Diethyl-3′,5′-di-sek-butyl-4,4′-diamino-diphenylmethan, 3-Methyl-3′, 5,5′-triisopropyl-, 3-Ethyl-3′,5,5′-triisopropyl-, 3-Methyl-3′,5,5′-tri-sek-butyl-3-Ethyl-3′,5,5′-tri-sek-butyl-4,4′-diamino-diphenylmethan, 3,3′ -Diisopropyl-5,5′-di-sek-butyl-, 3,5-Diisopropyl-3′,5′-di-sek-butyl-, 3-Ethyl-5-sek-butyl-3′,5′-diisopropyl-, 3-Methyl-5-tert-butyl-3′,5′ -diisopropyl-, 3-Ethyl-5-sek-butyl-3′-methyl-5′-tert-butyl-, 3,3′,5,5′-Tetraisopropyl- und 3,3′ ,5,5′-Tetra-sek-butyl-4,4′-diamino-diphenylmethan.
   Vorzugsweise verwendet werden folgende primären aromatischen alkylsubstituierten Phenylen-diamine und Diamino-diphenylmethane: 2,4-Diethyl-, 2,4-Dimethyl-phenylendiamin-1,3, 2,4-Diethyl-6-methyl-, 2-Methyl-4,6-diethyl-phenylendiamin-1,3, 2,4,6-Triethyl-phenylendiamin-1,3, 2,4-Dimethyl-6-tert-butyl-, 2,4-Dimethyl-6-isooctyl- und 2,4-Dimethyl-6-cyclohexyl-phenylendiamin-1,3 sowie 3,3′-Diisopropyl-, 3,5-Dimethyl-3′,5′-diisopropyl- und 3,3′,5,5′-Tetraisopropyl-4,4′-diamino-diphenylmethan.
   Die primären aromatischen Diamine können einzeln oder in Form von Mischungen, beispielsweise aus gegebenenfalls alkylsubstituierten 1,3-Phenylendiaminen, Diamino-diphenylmethanen, 3,3′-di- und/oder 3,3′,5,5′-tetraalkylsubstituierten 4,4′-Diamino-diphenylmethanen eingesetzt werden.
   Als sek. aromatische Diamine seien beispielhaft genannt: N,N′-dialkylsubstituierte aromatische Diamine, die gegebenenfalls am aromatischen Kern durch Alkylreste substituiert sein können, mit 1 bis 20, vorzugsweise 1 bis 4 Kohlenstoffatomen im N-Alkylrest, wie N,N′-Diethyl-, N,N′-Di-sek-pentyl-, N,N′-Di-sek-hexyl-, N,N′-Di-sek-decyl-, N,N′-Dicyclohexyl-p- bzw. -m-phenylendiamin, N,N′-Dimethyl-, N,N′-Diethyl-, N,N-Diisopropyl-, N,N-Di-sek-butyl-, N,N′-Dicyclohexyl-4,4′-diamino-diphenylmethan und N,N′-Di-sek-butyl-benzidin.
   Zweckmäßiger Anwendung finden als Kettenverlängerungs- und/oder Vernetzungsmittel (C) die technisch leicht zugänglichen Alkandiole mit 2 bis 6 Kohlenstoffatomen, Alkantriole mit 3 bis 6 Kohlenstoffatomen, Dialkylenglykolether mit 4 bis 8 Kohlenstoffatomen, alkylsubstituierten Phenylendiamine, 3,3′-di- und/oder 3,3′,5,5′-tetraalkylsubstituierten 4,4-Diamino-diphenylmethane.
   Besonders bewährt haben sich als Komponente (C) und daher insbesondere Anwendung finden 2,4-Diethyl-6-methyl-phenylendiamin-1,3, Mischungen aus 2,4-Diethyl-6-methyl- und 2-Methyl-4,6-diethyl-phenylendiamin-1,3 und Mischungen aus den Methyl-diethyl-phenylendiaminen-1,3 und mindestens einer Verbindung aus der Gruppe der Alkandiole mit 2 bis 6 Kohlenstoffatomen, Dialkylenglykolether mit 4 bis 8 Kohlenstoffatomen, Glycerin und Trimethylolpropan.
   Die Kettenverlängerungs- und/oder Vernetzungsmittel (C) oder ihre Gemische werden zur Herstellung der erfindungsgemäßen Stoffmischungen in Mengen von 1 bis 25 Gew.Teilen, vorzugsweise von 5 bis 20 Gew.Teilen und insbesondere von 8 bis 18 Gew.Teilen, bezogen auf 100 Gew.Teile mindestens einer Verbindung mit mindestens 2 gegenüber Isocyanatgruppen reaktiven Wasserstoffatomen (B) eingesetzt.
D. Zur Beschleunigung der Urethanbildung aus den Hydroxylgruppen enthaltenden Aufbaukomponenten (B) und (C) und den desaktivierten, organischen Polyisocyanaten (A) werden den erfindungsgemäßen lagerstabilen, hitzehärtbaren Stoffmischungen Katalysatoren (D) einverleibt. Als Katalysatoren vorzüglich geeignet sind Metallsalze und -acetylacetonate, so daß diese Verbindungen zweckmäßigerweise eingesetzt werden. Beispielhaft genannt seien als Katalysatoren Bleinaphthenat, Blei(II)octoat, Wismut(III)stearat, Zinkstearat, Eisen(III)acetylacetonat, Kobalt(II)acetylacetonat, Zink(II)acetylacetonat Bis-laurylzinndimercaptid, 2,3,4,6,7,8,9,10-Octahydro-pyramido-1,2-azepin oder Mischungen aus mindestens zwei der genannten Katalysatoren, wobei eine Kombination aus Bleinaphthenat und Wismut(III)stearat, zweckmäßigerweise im Gewichtsverhältnis von 2 bis 1 : 1, bevorzugt eingesetzt wird. Anwendung finden üblicherweise 0,1 bis 3 Gew.%, vorzugsweise 0,6 bis 0,8 Gew.% Katalysator, bezogen auf das Gewicht der Komponente (B).
   Den erfindungsgemäßen Stoffmischungen können gegebenenfalls auch noch Hilfsmittel und/oder Zusatzstoffe einverleibt werden. Genannt seien beispielsweise Pigmente, Farbstoffe, Hydrolyseschutzmittel, UV-Stabilisatoren, Lichtschutzmittel, Antioxidantien sowie Weichmacher.
   Als Pigmente kommen beispielsweise die für Polyisocyanat-polyadditionsprodukte bekannten, anorganischen und/oder organischen Pigmente in Betracht, die üblicherweise in der Stoffmischung in einer Menge von 0,01 bis 2 Gew.%, bezogen auf das Gesamtgewicht, enthalten sind. Beispielsweise genannt seien Schwarzpaste, Kupfer-, Aluminium-, Eisenpulver, Zinkstaub, Eisenoxid, Cadmiumsulfid u.a.
   Durch den Zusatz geeigneter Pigmente, zweckmäßigerweise in Verbindung mit UV-Stabilisatoren und/oder Lichtschutzmitteln sowie Antioxidatien können auch unter Verwendung von aromatischen Polyisocyanaten lichtbeständige Folien erhalten werden. Die UV-Stabilisatoren und/oder Lichtschutzmittel sowie die Antioxidantien werden hierzu zweckmäßigerweise in einer Menge von 0,01 bis 2 Gew.%, bezogen auf das Gesamtgewicht der Stoffmischung eingesetzt.
   Als Weichmacher haben sich bewährt und werden daher vorzugsweise solche verwendet, die mit NCO-Gruppen reaktive Reste gebunden enthalten. Beispielhaft genannt seien 1,4-Butandiol-1,6-Hexandiolpolyadipate, Ketonharze, hergestellt aus Cyclohexanon und Formaldehyd und gelöst in Ricinusöl, z.B. solche mit einer Hydroxylzahl von ungefähr 165, Polykondensationsprodukte, hergestellt aus Phthalsäureanhydrid, Adipinsäure, Ölsäure, Ethylenglykol und Glycerin z.B. mit einer Hydroxylzahl von 370 oder hergestellt aus Phthalsäureanhydrid, Adipinsäure, Ölsäure und Trimethylolpropan, und Alkylepoxistearate. Die Weichmacher werden üblicherweise in Mengen von 0,5 bis 10 Gew.%, vorzugsweise 1 bis 6 Gew.%, bezogen auf das Gesamtgewicht der Stoffmischung, eingesetzt.
   Zusätzliche Angaben zu den obengenannten und nähere Angaben über andere Hilfsmittel und/oder Zusatzstoffe sind der Fachliteratur, beispielsweise der Monographie von J.H. Saunders und K.C. Frisch "High Polymers" Band XVI Polyurethanes, Teil 1 und 2, Verlag Interscience Publishers 1962 bzw. 1964 oder dem Kunststoff-Handbuch, Band VII, Polyurethane, 1. Auflage, 1966 oder 2. Auflage, 1983, Carl Hanser Verlag, München, zu entnehmen.
   Die Herstellung der erfindungsgemäßen Stoffmischungen erfolgt nach bekannten, beispielsweise in den EP-A-062 780, EP-A-100 507 oder EP-A-100 508 beschriebenen Verfahren, zweckmäßigerweise unter Verwendung üblicher Dispergier- und Mischaggregate. Das organische Polyisocyanat (A) wird hierzu vorteilhafterweise bei Temperaturen unter 40°C, vorzugsweise bei Temperaturen von 0 bis 25°C in einer Mischung aus den Aufbaukomponenten (B) bis (D) oder (B) und/oder (C) oder vorzugsweise in mindestens einer Verbindung mit mindestens zwei gegenüber Isocyanatgruppen reaktiven Wasserstoffatomen (B) dispergiert, wobei die Stoffmischungen oder die Aufbaukomponente (B) entweder bereits die gesamte Menge eines oder mehrerer der Desaktivierungsmittel enthalten oder es wird mindestens eines der Desaktivierungsmittel den Stoffmischungen oder der Aufbaukomponente (B) kurz nach dem Dispergiervorgang einverleibt. Beide Verfahrensweisen können auch miteinander kombiniert werden, wobei die Aufbaukomponenten (B) und/oder (C), beispielsweise einen Teil des Desaktivierungsmittels enthalten, während der andere Teil desselben oder eines anderen Desaktivierungsmittels der Stoffmischung nach der Polyisocyanatdispergierung hinzugefügt wird. Wird als kohärente Phase zur Dispergierung der Polyisocyanate nur die Aufbaukomponente (B) oder eine Mischung aus (B) und (C) verwendet, so werden die übrigen Aufbaukomponenten der Stoffmischung, beispielsweise die Aufbaukomponente (D) nachträglich der erhaltenen Dispersion einverleibt. Selbstverständlich kann die Polyisocyanatdispersion auch mit den zur Herstellung verwendeten oder anderen Aufbaukomponenten (B) und/oder (C) gemischt werden.
   Zur Herstellung der erfindungsgemäßen Stoffmischungen können die Mengenverhältnisse der Aufbaukomponenten (A) bis (C) in breiten Grenzen, beispielsweise in Verhältnissen von freien Isocyanatgruppen zu Hydroxyl-, Aminogruppen oder zur Summe aus Hydroxyl- und Aminogruppen von 0,8 bis 2,5:1 variiert werden. Stoffmischungen, die die desaktivierten Polyisocyanate in hohen Konzentrationen, beispielsweise in NCO:OH- bzw. NH₂- bzw. OH- plus NH₂-Gruppenverhältnissen von 10:1 bis 3:1, vorzugsweise 5:1 bis 3:1 enthalten, können direkt zu Urethan- und/oder Harnstoff- und Isocyanuratgruppen enthaltenden Polyisocyanat-polyadditionsprodukten verarbeitet oder als sogenannter Masterbatch verwendet und vor der Verarbeitung mit den Aufbaukomponenten (B) und/oder (C) verdünnt werden. Zur Herstellung von Urethan- und/oder Harnstoffgruppen enthaltenden Formteilen oder insbesondere Folien finden vorzugsweise Stoffmischungen Verwendung, bei denen die Verhältnisse von NCO-:OH- und/oder NH₂-Gruppen 0,8 bis 2,5:1, vorzugsweise 0,9 bis 1,2:1 betragen.
   Die erfindungsgemäßen lagerbeständigen, hitzehärtbaren Stoffmischungen eignen sich zur Herstellung von Kunststoff-Formteilen. Vorzugsweise Verwendung finden sie zur Herstellung von Urethan- und/oder Harnstoffgruppen gebunden enthaltenden Folien.
   Zur Herstellung der Folien, die erfindungsgemäß Urethan- und/oder Harnstoffgruppen, vorzugsweise Urethan- und Harnstoffgruppen gebunden enthalten, werden die erfindungsgemäßen Stoffmischungen mit einem auf 60°C bis 150°C, vorzugsweise 80°C bis 130°C temperierten Formwerkzeuge, das aus beliebigen Formwerkzeugmaterialien, wie z.B. Epoxid-, Polyesterharzmassen oder vorzugsweise aus metallischen Werkstoffen, wie z.B. Aluminium, Gußeisen, Stahl oder Edelstahl, bestehen kann, in Kontakt gebracht. Die Stoffmischung härtet hierbei an der Formwerkzeugoberfläche aus und die gebildete Folie kann aufgrund der erfindungsgemäß geeigneten speziellen Desaktivierungsmittel problemlos von der Oberfläche des Formwerkzeugs abgetrennt werden.
   Die erfindungsgemäßen Stoffmischungen können mit dem temperierten Formwerkzeug nach bekannten Methoden, wie z.B. durch Begießen, Bestreichen, Besprühen der Formwerkzeugoberfläche in Kontakt gebracht werden. Nach den vorzugsweise angewandten Ausführungsformen wird die hitzehärtbare Stoffmischung durch Eingießen oder Einspritzen in den Hohlraum des Formwerkzeugs eingebracht oder es wird die Oberfläche des temperierten Formwerkzeug mit der Stoffmischung besprüht oder es wird insbesondere das temperierte Formwerkzeug in ein Bad aus der Stoffmischung eingetaucht.
   Die beispielhaft genannten Methoden können jedoch auch miteinander kombiniert werden, wobei zweckmäßigerweise mindestens zwei der Methoden Anwendung finden. Beispielsweise kann eine Folie mit einheitlicher Schichtdicke hergestellt werden durch Eintauchen des temperierten Formwerkzeugs in ein Bad der Stoffmischung, das vorteilhafterweise eine Temperatur von 80 bis 150°C, insbesondere von 90 bis 130°C aufweist, für einen bestimmten Zeitraum. Sobald die ausgehärtete Stoffmischung auf der temperierten Formwerkzeugoberfläche die gewünschte Schichtdicke erreicht hat, wird das Formwerkzeug aus dem Bad entnommen die überschüssige, nicht ausgehärtete Stoffmischung entfernt und die gebildete Folie vom Formwerkzeug abgetrennt. Es ist jedoch auch möglich, das Formwerkzeug mit der gebildeten Folie aus dem Bad zu entnehmen und die Schichtdicke der Folie in bestimmten Bereichen z.B. durch Besprühen mit derselben oder einer anderen Stoffmischung zu erhöhen und gegebenenfalls zu modifizieren. Nach der beschriebenen Methode kann beispielsweise aus einer Harnstoffgruppen bildenden erfindungsgemäßen Stoffmischung eine Harnstoffgruppen enthaltende Folie hergestellt und diese ganz oder teilweise mit einer Harnstoff- und Urethangruppen bildenden Stoffmischung beschichtet und auf diese Weise die mechanischen Eigenschaften der hergestellten Folie variiert werden. Selbstverständlich kann das temperierte Formwerkzeug zur Bildung einer mehrschichtigen Folie auch nacheinander in mehrere Bäder mit verschiedenartigen, erfindungsgemäßen Stoffmischungen eingetaucht werden. Je nach gewünschter Modifizierungsart der Folie können die erfindungsgemäßen unterschiedlichen Stoffmischungen in beliebiger Reihenfolge nacheinander Anwendung finden. Wie bereits dargelegt wurde, können nach Aushärtung der Stoffmischung auf der Formwerkzeugoberfläche die gebildeten Folien problemlos abgetrennt werden.
   Die nach dem erfindungsgemäßen Verfahren hergestellten Folien besitzen zweckmäßigerweise eine Dicke von 10 bis 20000µm, vorzugsweise von 50 bis 5000µm und insbesondere 800 bis 3000µm. Derartige Foliendicken können beispielsweise erzielt werden durch eine entsprechende Einstellung der lichten Weite des Formwerkzeugs oder der Schlitzhöhe der Vorrichtung bei z.B. einem kontinuierlich arbeitenden Bandverfahren. Es ist jedoch auch möglich, die Formwerkzeugoberfläche mit der erforderlichen Menge der Stoffmischung, zweckmäßigerweise einer Menge von 15 bis 30000 g/m², vorzugsweise von 1500 bis 6000 g/m² zu beschichten. Nach dem vorzugsweise zur Anwendung kommenden Verfahren wird das temperierte Formwerkzeug in Abhängigkeit von der Formwerkzeugtemperatur, der Stoffmischungstemperatur und der gewünschten Foliendicke für eine bestimmte Zeitdauer, z.B. von 0,5 bis 5 Minuten, vorzugsweise von 1 bis 4 Minuten, in ein Bad mit der Stoffmischung eingetaucht und an der Formwerkzeugoberfläche aushärten gelassen.
   Die aus den erfindungsgemäßen Stoffmischungen hergestellte Folien besitzen einen lederartigen Griff und zeichnen sich insbesondere durch ausgezeichnete mechanische Eigenschaften aus. Die Folien enthalten keine flüchtigen Bestandteile, wie z.B. tertiäre Amine als Polyurethankatalysatoren und zeigen damit auch keine Ausschwitzen (Fogging) dieser Bestandteile. Die Produkte eigenen sich insbesondere zur Hinterschäumung mit schaumfähigen Mischungen zur Bildung von Polyisocyanat-polyadditionsprodukten, als Dekorfolien, Schaltsack für Kraftfahrzeuge u.a. Die hinterschäumten Folien eignen sich als Verkleidungselemente in Verkehrsmitteln.

### Beispiel

### a) Herstellung der lagerbeständigen, hitzehärtbaren Stoffmischung

37 Gew.Teile dimeres Uretdiongruppen enthaltendes 2,4-Toluylen-diisocyanat wurden in einer Mischung aus
39,48 Gew.Teilen eines Polyoxypropylen(81,5 Gew.%)-polyoxyethylen(18,5 Gew.%)-glykols mit einem durchschnittlichen Molekulargewicht von 3500,
20,00 Gew.Teilen eines trifunktionellen Polyether-polyols mit einem durchschnittlichen Molekulargewicht von 4800, hergestellt durch Polyaddition von 1,2-Propylenoxid an Trimethylolpropan und anschließende Polyaddition von Ethylenoxid an das erhaltene Trimethylolpropan-polyoxypropylen-addukt und
9,41 Gew.Teilen eines trifunktionellen polymermodifizierten Polyether-polyols mit einem durchschnittlichen Molekulargewicht von 4000, hergestellt durch Polyaddition von 1,2-Propylenoxid (86 Gew.%) an Glycerin als Startermolekül, anschließende Polyaddition von Ethylenoxid (14 Gew.%) an das erhaltene Glycerin-polyoxypropylen-addukt und Dispergierung eines synthetisch hergestellten Magnesiumaluminiumsilikats (Transpafill^{R} der Firma Degussa) als Füllstoff im Gewichtsverhältnis Polyoxypropylen-polyoxyethylen-triol zu Füllstoff von 85:15
bei 23°C mit Hilfe eines Dissolvers mit 1000 UpM 5 Minuten lang dispergiert. In die erhaltene Dispersion wurden über einen Zeitraum von 2 Minuten 0,96 Gew.Teile einer 50 gew.%igen Lösung in Ethylenglykol eines Reaktionsprodukts, hergestellt durch Umsetzung von einem Mol 3,3′-Dimethyl-4,4′-diamino-dicyclohexylmethan mit 2 Molen Ölsäure bei 23°C, eindispergiert.

Man erhielt eine gutfließende Dispersion, in die unter Rühren bei 23°C eingebracht wurden:
1,0 Gew.Teile Trimethylolpropan,
3,62 Gew.Teile Ethylenglykol,
0,52 Gew.Teile einer 24 gew.%igen Lösung von Blei(II)naphthenat in Naphthensäure,
20,0 Gew.Teile eines Polyoxypropylen-glykols mit einem Molekulargewicht von 600, und
5 Gew.Teile 1-Methyl-3,5-diethyl-2,4-diaminobenzol
Die erhaltene Stoffmischung war mehr als 12 Monate lagerstabil und besaß bei 23°C eine Viskosität von 2775 m·Pa·s.

### b) Herstellung der Urethan- und Harnstoffgruppen enthaltenden Folie

Ein elektrisch beheizbares Formwerkzeug aus Gußeisen mit der Raumform eines Automobilhandschuhfaches mit einer Formwerkzeugtemperatur von 110°C und einer konturierten Formwerkzeugoberfläche wurde 20 Sekunden lang in ein Bad aus der Stoffmischung gemäß Beispiel 1a mit einer Temperatur von 60°C eingetaucht und danach das Formwerkzeug wieder entnommen. Nach einer Nachheizzeit von 60 Sekunden war die Stoffmischung vollständig ausgehärtet und die Folie konnte problemlos vom Formwerkzeug abgezogen werden. Die konturierte Folie besaß einen lederartigen Griff und wies bei einer Dicke von 4 mm folgende mechanische Eigenschaften auf:

| | |
|---|---|
| Reißdehnung nach DIN 53455 [%] | 160 |
| Reißfestigkeit nach DIN 53455 [N/mm²] | 8,7 |
| Weiterreißfestigkeit nach DIN 53515 [N/mm] | 29 |
| Shore-Härte A nach DIN 53505 | 85 |

Die Folie konnte 500 Stunden bei 125°C in einem Umluftschrank gelagert werden, ohne daß eine Verfärbung eintrat.

## Patentansprüche

1. Hitzehärtbare Stoffmischungen mit einer Viskosität bei 23°C Von 500 bis 20 000 m Pa·s, enthaltend
A. ein organisches Polyisocyanat,
B. mindestens eine Verbindung mit mindestens zwei gegenüber Isocyanatgruppen reaktiven Wasserstoffatomen und einem durchschnittlichen Molekulargewicht von 250 bis 8500,
wobei man ein bei Raumtemperatur festes organisches Polyisocyanat (A), in Form von diskreten Teilchen mit einem Teilchendurchmesser von 0.1 bis 150 µm, an der Teilchenoberfläche durch chemische Reaktion mit einem Desaktivierungsmittel desaktiviert, indem man 0.1 bis 20 Äquivalent% der insgesamt vorhandenen Isocyanatgruppen von (A) mit dem Desaktivierungsmittel umsetzt und das erhaltene oberflächenmodifizierte Polyisocyanat in mindestens einer Verbindung mit mindestens zwei gegenüber Isocyanatgruppen reaktiven Wasserstoffatomen (B) dispergiert,
C. Kettenverlängerungsmittel und/oder Vernetzungsmittel mit einem durchschnittlichen Molekulargewicht von 62 bis 500 und einer durchschnittlichen Funktionalitat von 2 bis 4 und in Mengen von 1 bis 25 Gewichtsteilen bezogen auf 100 Gewichtsteile B, sowie
D. Katalysatoren
dadurch gekennzeichnet daß man als Desaktivierungsmittel ein Reaktionsprodukt verwendet, hergestellt aus einem Mol eines primären organischen Amins mit 2 bis 32 Kohlenstoffatomen, ausgewählt aus der Gruppe der aromatischen, aliphatischen, cycloaliphatischen. cycloaliphatisch-aliphatischen und aromatisch-aliphatischen Diamine oder Mischungen davon und 1.5 bis 2.5 Holen einer organischen Monocarbonsäure oder deren Anhydrid mit mindestens 6 Kohlenstoffatomen oder einer Arylsulfonsäure.

2. Hitzehärtbare Stoffmischungen nach Anspruch 1, dadurch gekennzeichnet, daß man als Desaktivierungsmittel ein Reaktionsprodukt verwendet, dessen organische Monocarbonsäure oder dessen Anhydrid mit mindestens 6 Kohlenstoffatomen ausgewählt ist aus der Gruppe der aliphatischen Monocarbonsäuren, der aliphatischen Monocarbonsäureanhydride, der aromatischen Monocarbonsäuren und der aromatischen Monocarbonsäureanhydride oder Mischungen davon oder der Arylsulfonsäuren.

3. Hitzehärtbare Stoffmischungen nach einem der Ansprüche 1 bis 2, dadurch gekennzeichnet, daß man als Desaktivierungsmittel ein Reaktionsprodukt verwendet, hergestellt aus einem Mol 3,3'-Dimethyl-4,4'-diamino-dicyclohexylmethan und ungefähr 2 Molen Ölsäure und/oder Stearinsäure.

4. Hitzehärtbare Stoffmischungen nach einem der Ansprüche 1 bis 3, dadurch gekennzeichnet, daß man als Katalysatoren (D) verwendet Bleinaphthenat, Blei(II)octoat, Wismut(III)stearat, Zinkstearat, Eisen(III)acetylacetonat, Kobalt(II)acetylacetonat, Zink(II)acetylacetonat, Bis-laurylzinndimercaptid, 2,3,4,6,7,8,9,10-Octahydro-pyramido-1,2-azepin oder Mischungen aus mindestens zwei der genannten Katalyatoren.

5. Hitzhärtbare Stoffmischungen nach einem der Ansprüche 1 bis 4, dadurch gekennzeichnet, daß die Stoffmischungen als Katalysator (D) enthalten eine Kombination aus Bleinaphthenat und Wismut(III)stearat im Gewichtsverhältnis 2:1 bis 1:1.

6. Hitzehärtbare Stoffmischungen nach einem der Ansprüche 1 bis 5, dadurch gekennzeichnet, daß die Stoffmischungen als Kettenverlängerungsmittel und/oder Vernetzungsmittel (C) enthalten 2,4-Diethyl-6-methyl-phenylendiamin-1,3, ein Gemisch aus 2,4-Diethyl-6-methyl- und 2-Methyl-4,6-diethyl-phenylendiamin-1,3 oder eine Mischung aus dem genannten 2,4-Diethyl-6-methyl- und 2-Methyl-4,6-diethyl-phenylendiamin-1,3-Gemisch und mindestens einer Verbindung aus der Gruppe der Alkandiole mit 2 bis 6 Kohlenstoffatomen, Dialkylenglykolether mit 4 bis 8 Kohlenstoffatomen, Glycerin und Trimethylolpropan.

7. Hitzehärtbare Stoffmischungen nach einem der Ansprüche 1 bis 6, dadurch gekennzeichnet, daß die Verbindung mit mindestens zwei gegenüber Isocyanatgruppen reaktiven Wasserstoffatomen (B) aus mindestens einem polymermodifizierten Polyether-polyol besteht, das, bezogen auf das Gesamtgewicht, 2 bis 50 Gew.% dispergierte anorganische Füllstoffe, organische Füllstoffe oder Polymerpartikel enthält, wobei die Polymerpartikel vorzugsweise ausgewählt sind aus der Gruppe der Polyharnstoffe, Polyhydrazide, tert. Aminogruppen gebunden enthaltenden Polyurethane und Pfropfpolymeren.

8. Verwendung der, hitzehärtbaren Stoffmischungen nach einem der Ansprüche 1 bis 7 zur Herstellung von Urethan- und/oder Harnstoffgruppen gebunden enthaltenden Folien, vorzugsweise mit einer Dicke von 10 bis 20000 µm.

## Claims

1. A heat-curable mixture having a viscosity of from 500 to 20,000 mPa.s at 23°C, containing
A. an organic polyisocyanate,
B. at least one compound having at least two hydrogen atoms reactive toward isocyanate groups and an average molecular weight of from 250 to 8,500,
an organic polyisocyanate (A) which is solid at room temperature, in the form of discrete particles having a particle diameter of from 0.1 to 150 µm, being deactivated at the particle surface by chemical reaction with a deactivator, by reacting from 0.1 to 20 equivalent % of the total amount of isocyanate groups present in (A) with the deactivator and dispersing the resulting surface-modified polyisocyanate in at least one compound having at least two hydrogen atoms (B) reactive toward isocyanate groups,
C. chain extenders or crosslinking agents having an average molecular weight of from 62 to 500 and an average functionality of from 2 to 4, in amounts of from 1 to 25 parts by weight, based on 100 parts by weight of B, and
D. catalysts,
wherein the deactivator used is a reaction product prepared from one mol of a primary organic amine of 2 to 32 carbon atoms, selected from the group consisting of the aromatic, aliphatic, cycloaliphatic, cycloaliphatic-aliphatic and aromatic-aliphatic diamines, or a mixture thereof, and from 1.5 to 2.5 mol of an organic monocarboxylic acid or its anhydride of not less than 6 carbon atoms or of an arylsulfonic acid.

2. A heat-curable mixture as claimed in claim 1, wherein the deactivator used is a reaction product whose organic monocarboxylic acid or whose anhydride of not less than 6 carbon atoms is selected from the group consisting of the aliphatic monocarboxylic acids, the aliphatic monocarboxylic anhydrides, the aromatic monocarboxylic acids and the aromatic monocarboxylic anhydrides and mixtures thereof, or of the arylsulfonic acids.

3. A heat-curable mixture as claimed in claim 1 or 2, wherein the deactivator used is a reaction product prepared from one mol of 3,3'-dimethyl-4,4'-diamino-dicyclohexylmethane and about 2 mol of oleic acid or stearic acid.

4. A heat-curable mixture as claimed in any of claims 1 to 3, wherein the catalyst (D) used is lead naphthenate, lead(II) octoate, bismuth(II) stearate, zinc stearate, iron(III) acetylacetonate, cobalt(II) acetylacetonate, zinc(II) acetylacetonate, bislauryltin dimercaptide, 2,3,4,6,7,8,9,10-octahydropyramido-1,2-azepin or a mixture of at least two of the stated catalysts.

5. A heat-curable mixture as claimed in any of claims 1 to 4, which contains, as catalyst (D), a combination of lead naphthenate and bismuth(III) stearate in a weight ratio of from 2: 1 to 1 : 1.

6. A heat-curable mixture as claimed in any of claims 1 to 5, which contains, as the chain extender or crosslinking agent (C), 2,4-diethyl-6-methylphenylene-1,3-diamine, a mixture of 2,4-diethyl-6-methyl- and 2-methyl-4,6-diethylphenylene-1,3-diamine or a mixture of the stated 2,4-diethyl-6-methyl- and 2-methyl-4,6-diethylphenylene-1,3-diamine mixture and at least one compound selected from the group consisting of the alkanediols of 2 to 6 carbon atoms, dialkylene glycol ethers of 4 to 6 carbon atoms, glycerol and trimethylolpropane.

7. A heat-curable mixture as claimed in any of claims 1 to 6, wherein a compound having at least two hydrogen atoms (B) reactive toward isocyanate groups consists of at least one polymer-modified polyetherpolyol which contains from 2 to 50% by weight, based on the total weight, of dispersed inorganic fillers, organic fillers or polymer particles, the polymer particles preferably being selected from the group consisting of the polyureas, polyhydrazides, polyurethanes containing bound tert-amino groups and graft polymers.

8. Use of a heat-curable mixture as claimed in any of claims 1 to 7 for the preparation of films containing bound urethane or urea groups and preferably having a thickness of from 10 to 20,000 µm.

## Revendications

1. Mélanges de substances thermodurcissables ayant une viscosité de 500 à 20 000 mPa.s à 23° C et contenant
A. un polyisocyanate organique,
B. au moins un composé à au moins deux atomes d'hydrogène réactifs avec les groupes isocyanate et ayant un poids moléculaire moyen de 250 à 8 500,
pour lesquels on a désactivé un polyisocyanate organique solide à température ambiante (A) à l'état de particules séparées d'un diamètre de 0,1 à 150 µm, à la surface des particules, par réaction chimique avec un agent désactivant, par réaction de 0,1 à 20 équivalents % des groupes isocyanate totaux de (A) avec l'agent désactivant, et on a dispersé le polyisocyanate ainsi modifié en surface dans au moins un composé à au moins deux atomes d'hydrogène réactifs à l'égard des groupes isocyanate (B),
C. des agents d'allongement des chaînes et/ou des agents réticulants d'un poids moléculaire moyen de 62 à 500 et d'une fonctionnalité moyenne de 2 à 4, en quantité de 1 à 25 parties en poids pour 100 parties en poids de B) et
D: des catalyseurs,
caractérisé en ce que l'on utilise en tant qu'agent désactivant un produit de réaction préparé à partir d'une mole d'une amine organique primaire contenant 2 à 32 atomes de carbone et choisie dans le groupe des diamines aromatiques, aliphatiques, cycloaliphatiques, cycloaliphatique-aliphatiques et aromatique-aliphatiques ou leurs mélanges et de 1,5 à 2,5 mol d'un acide organique monocarboxylique ou son anhydride à au moins 6 atomes de carbone ou d'un acide arylsulfonique.

2. Mélanges de substances thermodurcissables selon la revendication 1, caractérisés en ce que l'on utilise en tant qu'agent désactivant un produit de réaction dont l'acide organique monocarboxylique ou son anhydride à au moins 6 atomes de carbone est choisi dans le groupe des acides aliphatiques monocarboxyliques, des anhydrides d'acides aliphatiques monocarboxyliques, des acides aromatiques monocarboxyliques et des anhydrides d'acides aromatiques monocarboxyliques ou leurs mélanges ou des acides arylsulfoniques.

3. Mélanges de substances thermodurcissables selon une des revendications 1 et 2, caractérisés en ce que l'on utilise en tant qu'agent désactivant un produit de réaction préparé à partir d'une mole de 3,3'-diméthyl-4,4'-diamino-dicyclohexylméthane et environ 2 mol d'acide oléique et/ou d'acide stéarique.

4. Mélanges de substances thermodurcissables selon une des revendications 1 à 3, caractérisés en ce que l'on utilise en tant que catalyseurs D) du naphténate de plomb, del'octanoate de plomb-II, du stéarate de bismuth-III, du stéarate de zinc, de l'acétylacétonate de fer-III, de l'acétylacétonate de cobalt-II, de l'acétylacétonate de zinc-II, du dimercaptide de bis-lauryl-étain, la 2,3,4,6,7,8,9,10-octahydro-pyramido-1,2-azépine ou des mélanges d'au moins deux des catalyseurs mentionnés.

5. Mélanges de substances thermodurcissables selon une des revendications 1 à 4, caractérisés en ce qu'ils contiennent en tant que catalyseur D), une combinaison de naphténate de plomb et de stéarate de bismuth-III dans des proportions relatives en poids de 2 : 1 à 1 : 1.

6. Mélanges de substances thermodurcissables selon une des revendications 1 à 5, caractérisés en ce qu'ils contiennent en tant qu'agents d'allongement des chaînes et/ou agents réticulants C), de la 2,4-diéthyl-6-méthyl-phénylène-diamine-1,3, un mélange de 2,4-diéthyl-6-méthyl- et de 2-méthyl-4,6-diéthyl-phénylène-diamine-1,3 ou un mélange du mélange de 2,4-diéthyl-6-méthyl- et de 2-méthyl-4,6-diéthyl-phénylène-diamine en question et d'au moins un composé du groupe des alcane-diols en C2-C6, des éthers de dialkylène-glycols en C4-C8, du glycérol et du triméthylolpropane.

7. Mélanges de substances thermodurcissables selon une des revendications 1 à 6, caractérisés en ce que le composé à au moins deux atomes d'hydrogène réactifs avec les groupes isocyanate (B) consiste en au moins un polyéther-polyol à modification polymère qui contient, sur son poids total, de 2 à 50 % en poids de matières de charges minérales, de matières de charges organiques ou de particules de polymère à l'état dispersé, les particules de polymère étant de préférence choisies dans le groupe des polyurées, des polyhydrazides, des polyuréthannes contenant des groupes tert-amino combinés chimiquement et des polymères greffés.

8. Utilisation des mélanges de substances thermodurcissables selon une des revendications 1 à 7, pour la fabrication de feuilles contenant des groupes uréthanne et/ou urée à l'état chimiquement combiné, de préférence d'une épaisseur de 10 à 20 000 µm.
